# EUROPÄISCHE PATENTSCHRIFT

(11) **EP 3 692 615 B1**
(45) Veröffentlichungstag und Bekanntmachung des Hinweises auf die Patenterteilung: **16.11.2022**
(21) Anmeldenummer: 17780088.5
(22) Anmeldetag: 04.10.2017
(51) Int. Cl.: H02G 3/12, H02G 3/22

(54) **MONTAGEHÜLSE**
MOUNTING SLEEVE
MANCHON DE MONTAGE

(43) Veröffentlichungstag der Anmeldung: 12.08.2020
(73) Patentinhaber: Oblamatik AG, 7000 Chur (CH)
(72) Erfinder: OBRIST, Roland, 7412 Scharans (CH); KNUPFER, Daniel, 7205 Zizers (CH); KNUPFER, Thomas, 7302 Landquart (CH)
(74) Vertreter: Troesch Scheidegger Werner AG
(86) Internationale Anmeldenummer: PCT/EP2017/075236
(87) Internationale Veröffentlichungsnummer: WO 2019/068324

(56) Entgegenhaltungen:
- WO-A1-90/12433
- WO-A1-90/12433
- WO-A1-2015/118241
- WO-A1-2015/118241
- FR-A1- 2 991 114
- FR-A1- 2 991 114
- US-A- 5 542 859
- US-A- 5 542 859

## Beschreibung

### TECHNISCHES GEBIET

Die vorliegende Erfindung betrifft eine Montagehülse zur Montage von Bedienelementen in einer Ausnehmung in einer Wand, insbesondere im Sanitär- und Heizungsbereich.

### STAND DER TECHNIK

Aus dem Stand der Technik sind Unterputzdosen bekannt, welche in einer Wandausnehmung angeordnet und befestigt werden. Die Befestigung erfolgt durch Kleben, Klemmen oder Verschrauben der Unterputzdose mit der Wand. Die EP 1 722 453 offenbart eine Unterputzdose mit stirnseitig angeordneten Flügeln und vier Schrauben-verstellbaren Laschen, wobei die Wand zwischen den Flügeln und den Laschen geklemmt wird. Dies ist eine aufwändige Bauweise und erlaubt lediglich die Verwendung einer solchen Unterputzdose für einen beschränkten Wandstärkenbereich.

Die WO 90/12433 A1 offenbart eine Unterputzdose für Wände deren Dicke wesentlich geringer als die Länge der Montagehülse ist. Ein innerer Teil mit Klemmlaschen wird so weit durch die Wand gestossen, bis die Klemmlaschen von innen an der Wand anliegen können. Anschliessend wird am inneren Teil gezogen, wodurch die Klemmlaschen mit der Wand verspannt werden. Diese Art von Unterputzdose ist für den Einsatz mit dicken Wänden ungeeignet.

Die WO 2015/118241 A1 offenbart eine Unterputzdose mit einem inneren Teil mit vorgespannten Laschen, welche auf flexible Streifen eines äusseren Teils drücken könne, um diese nach aussen gegen die Innenseite einer dünnen Wand drücken zu können. Bei einer solchen Unterputzdose sind die erzeugbaren Klemmkräfte gering. Zudem eignen sie sich nur für einen beschränkten Wandstärkenbereich.

### BESCHREIBUNG DER ERFINDUNG

Eine Aufgabe der vorliegenden Erfindung besteht darin, eine Montagehülse bereitzustellen, welche weniger aufwändig in der Herstellung und der Montage ist und welche zusammen mit jeder Art von Wand verwendet werden kann.

Diese Aufgabe wird durch eine Montagehülse mit den Merkmalen des Anspruchs 1 gelöst. Weitere Ausführungsformen der Montagehülse, einer Bedienelement-Anordnung, sowie ein

Verfahren zur Verwendung der Montagehülse sind durch die Merkmale von weiteren Ansprüchen definiert. Eine erfindungsgemässe Montagehülse zur Montage in einer Ausnehmung in einer Wand umfasst eine erste Hülse mit einer Längsachse, wobei im Bereich eines ersten freien Endes der ersten Hülse ein Flansch angeordnet ist, welcher radial nach aussen über den Umfang des hülsenförmigen Körpers ragt, wodurch er an einer Aussenseite der Wand anschlagen kann. Die Montagehülse umfasst eine zweite Hülse, welche entlang der Längsachse verschiebbar in der ersten Hülse angeordnet ist und die Montagehülse umfasst ein Spannelement, mit welchem die beiden Hülsen von einer entspannten Stellung in eine verspannte Stellung bringbar sind. Die erste Hülse und die zweite Hülse umfassen mindestens ein Klemmelement, welches in der verspannten Stellung radial nach aussen über den Umfang des Körpers der ersten Hülse ragt, wodurch eine Verspannung der Montagehülse mit der Wand erreichbar ist. Diese Bauweise ist einfach in der Herstellung und der Montage und kann zusammen mit jeder Art von Wand verwendet werden. Zudem kann die Montagehülse wiederverwendet werden. Hierfür ist lediglich das Klemmelement zu lösen, wodurch die Verspannung der Montagehülse mit der Wand gelöst wird und sich die Montagehülse leicht aus der Ausnehmung der Wand entfernen lässt. Alternativ zu einem lösbaren Klemmelement kann auch ein Klemmelement eingesetzt werden, welches nicht zerstörungsfrei lösbar ist. Beispielsweise kann eine Lasche mit Rasten, wie ein Kabelbinder verwendet werden. Ein Ratschen/Stab Mechanismus stellt ein weiteres mögliches Klemmelement dar, wobei auf einer Seite des Stabes Kerben vorgesehen sind, in welche ein Anzugselement eingreifen kann und mit welchem der Stab entlang der Längsachse verschiebbar ist. Um den Stab zu lösen, kann dieser um die Längsachse gedreht werden, wodurch der Eingriff zwischen Stab und Anzugselement aufgehoben wird. In der einfachsten Ausführungsform umfasst die Montagehülse nur ein Klemmelement, wobei das Klemmelement beispielsweise eine Schraube ist. Andere Klemmelemente, wie beispielsweise Klemmhebel oder dergleichen können auch verwendet werden. Es können mehr als nur ein Klemmelement vorhanden sein. Beispielsweise können die erste Hülse und/oder die zweite Hülse zwei, drei, vier oder mehr Klemmelemente umfassen. Die beiden Hülsen können aus Kunststoff, wie beispielsweise Polyamid oder Metall gefertigt sein. Die beiden Hülsen können im Wesentlichen kreisrunde Querschnitte umfassen. Alternativ sind jedoch auch vier-, fünf- oder sechseckige Querschnitte möglich, wobei die Ecken kantig oder abgerundet sein können. Bei solchen vieleckigen Querschnitten ist eine relative Verdrehung der beiden Hülsen um die Längsachse nicht möglich. Der Flansch kann als geschlossener, umlaufender Kragen ausgebildet sein. Alternativ kann der Flansch Unterbrechungen umfassen, wodurch sich voneinander beabstandete Flanschabschnitte ergeben.

Erfindungsgemäß umfasst die erste Hülse mindestens ein erstes Klemmelement, welches mit zunehmender Verspannung zunehmend über den Umfang des Körpers der ersten Hülse ragt, wodurch eine radiale Verspannung der Montagehülse mit der Ausnehmung der Wand erreichbar ist und wobei die zweite Hülse mindestens ein zweites Klemmelement umfasst, welches mit zunehmender Verspannung in einem vorbestimmten Bereich gleichbleibend über den Umfang des Körpers der ersten Hülse ragt, wodurch eine Verspannung entlang der Längsachse der Montagehülse zumindest mit einer Innenseite der Wand erreichbar ist. Durch diese Ausgestaltung kann die Montagehülse zusammen mit jeder Art von Wand verwendet werden. Beispielsweise zusammen mit einer Gebäudewand, wie eine Massivwand oder eine Trockenbau-Wand oder zusammen mit einer Wand einer Sanitäreinrichtung, wie eine Wannenwand, eine Beckenwand oder eine an diese angrenzende Wand einer Abdeckung. Die Länge des Bereiches, in welchem das zweite Klemmelement gleichbleibend über den Umfang des Körpers der ersten Hülse ragt, ist durch die freie Länge des Schlitzes in der ersten Hülse bestimmbar. Wenn ein erstes Klemmelement und ein zweites Klemmelement vorhanden ist, dann kann die erste Hülse mit zunehmender Verspannung durch die zweite Hülse radial nach aussen mit der Ausnehmung der Wand verspannt werden und die zweite Hülse kann durch die erste Hülse entlang der Längsachse mit der Ausnehmung der Wand verspannt werden. Es können ein, zwei, drei, vier oder mehr erste und zweite Klemmelemente vorgesehen sein.

Erfindungsgemäß umfasst die zweite Hülse mindestens einen Keil, welcher mit einer zunehmenden Verspannung der beiden Hülsen das erste Klemmelement zunehmend radial nach aussen auslenken kann und/oder die erste Hülse umfasst mindestens eine Rampe, welche das zweite Klemmelement gegen die verspannte Stellung hin, zunehmend radial nach aussen auslenken kann. Da die Rampe an die freie Länge des Schlitzes anschliesst, kann das zweite Klemmelement erst in einem Bereich kurz vor der vollständigen Verspannung ausgelenkt werden. D.h. das zweite Klemmelement ist über den Bereich des freien Schlitzes gleichbleibend ausgelenkt und kann erst gegen das Ende des Schlitzes zunehmend ausgelenkt werden. Hierdurch kann das erste Klemmelement von Beginn der Verspannung an radial nach aussen gegen die Wandausnahme verspannt werden und das zweite Klemmelement kann erst entlang der Längsachse verschoben werden, ohne dass die radiale Klemmung zunehmen kann, wodurch der Flansch gegen die aussenliegende Wandoberfläche gezogen werden kann. Erst gegen Ende des Verspannbereiches der Montagehülse kann das zweite Klemmelement eine radial nach aussen gerichtete Klemmkraft erzeugen, wodurch eine zusätzliche radiale Klemmung mit der Wandausnehmung resultieren kann. Die Anzahl der Keile stimmt mit der Anzahl der ersten Klemmelemente überein und die Anzahl der Rampen stimmt mit der Anzahl der zweiten Klemmelemente überein. D.h. es können ein, zwei, drei, vier oder mehr Keile und/oder Rampen vorgesehen sein.

Erfindungsgemäß umfasst die erste Hülse mindestens einen Schlitz, welcher sich entlang der Längsachse erstreckt, durch welchen das zweite Klemmelement nach aussen ragen kann. Der Schlitz erstreckt sich über einen Teil der Länge des hülsenförmigen Körpers. Auf der gegen den Flansch gerichteten Seite ist der Schlitz durch eine Rampe begrenzt und auf der gegenüberliegenden Seite durch einen Steg. Es können mehr als nur ein Schlitz ausgebildet sein. Beispielsweise zwei, drei, vier oder mehr Schlitze, welche gleichmässig verteilt am Umfang der ersten Hülse angeordnet sein können. Die Anzahl der Schlitze entspricht der Anzahl der zweiten Klemmelemente überein. Dementsprechend können ein, zwei, drei, vier oder mehr Schlitze vorgesehen sein.

In einer Ausführungsform umfasst die erste Hülse einen in der Richtung der Längsachse an den Schlitz anschliessenden, dem Flansch gegenüberliegenden Steg, welcher in der entspannten Stellung eine radial nach innen gerichtete Kraftkomponente auf das zweite Klemmelement ausüben kann. Wenn die beiden Hülsen im Wesentlichen vollständig auseinandergefahren sind, so kann das zweite Klemmelement mit dem Steg nach radial nach innen gedrückt werden, wodurch das Entfernen der Montagehülse aus der Wandausnehmung wesentlich leichter ist.

In einer Ausführungsform umfasst das erste Klemmelement eine Lasche, welche einstückig mit der ersten Hülse ausgebildet ist und sich entlang der Längsachse erstreckt und deren freies Ende sich auf der dem Flansch gegenüberliegenden Seite befindet. Diese Ausgestaltung ist einfach und kostengünstig. Alternativ können die Laschen an der ersten Hülse angeordnet werden.

In einer Ausführungsform umfasst das erste Klemmelement Rippen, welche sich quer zur Längsachse erstrecken. Mit den Rippen kann die Befestigung in der Wandausnehmung verbessert werden.

In einer Ausführungsform umfasst das zweite Klemmelement eine Lasche, welche einstückig mit der zweiten Hülse ausgebildet ist und sich im Wesentlichen entlang der Längsachse erstreckt und deren freies Ende sich im Zusammenbau mit der ersten Hülse auf der dem Flansch zugewandten Seite der zweiten Hülse befindet. Diese Ausgestaltung ist einfach und kostengünstig. Alternativ können die Laschen an der zweiten Hülse angeordnet werden.

In einer Ausführungsform ist das zweite Klemmelement S-förmig ausgebildet, umfasst einen ersten Abschnitt, der an einer ersten Stirnseite des Körpers der zweiten Hülse anschliesst und in welchem der Abstand des zweiten Klemmelements von der Längsachse entlang der Längsachse im Wesentlichen gleich bleibt, umfasst einen zweiten Abschnitt, der an den ersten Abschnitt anschiesst und in welchem der Abstand des zweiten Klemmelements von der Längsachse entlang der Längsachse stetig zunimmt und umfasst einen dritten Abschnitt, der an den zweiten Abschnitt anschliesst und in welchem der Abstand des zweiten Klemmelements von der Längsachse entlang der Längsachse im Wesentlichen gleich bleibt. Diese Ausgestaltung erlaubt es im Zusammenbau der beiden Hülsen, dass das zweite Klemmelement durch den Schlitz der ersten Hülse radial nach aussen über die erste Hülse hinausragen kann. Zudem bewirkt diese Form, dass das zweite Klemmelement im vollkommen entspannten Zustand durch den Steg der ersten Hülse nach innen gedrückt werden kann, dass das zweite Klemmelement über einen bestimmten Längenbereich gleichbleibend über die erste Hülse hinausragen kann und dass das zweite Klemmelement im vollkommen verspannten Zustand durch die Rampe der ersten Hülse nach aussen gerückt werden kann.

In einer Ausführungsform ist am freien Ende des zweiten Klemmelements ein Axialanschlag vorgesehen, welcher als eine radiale Verdickung des freien Endes ausgebildet ist. Durch die Verdickung vergrössert sich die im Zusammenbau gegen den Flansch gerichtete Stirnseite des zweiten Klemmelements, wodurch die Verspannung gegen die innenseitige Wandoberfläche verbessert werden kann.

In einer Ausführungsform ist am freien Ende des zweiten Klemmelements ein Radialanschlag vorgesehen, welcher sich in Umfangrichtung über einen Teilbereich einer endseitigen Stirnseite des zweiten Klemmelements erstreckt. Der Radialanschlag ist derart ausgestaltet, dass er an einer inneren Kante der Wandausnehmung angreifen kann, wodurch verhindert werden kann, dass sich das zweite Klemmelement bei zunehmender Verspannung weiter radial nach aussen von der ersten Hülse abspreizt.

In einer Ausführungsform ist an einer zweiten Stirnseite des Körpers der zweiten Hülse ein Rohranschluss vorgesehen, welcher mindestens einen Abschnitt umfasst, der sich in einem umfangnahen Bereich von der zweiten Stirnseite aus entlang der Längsachse erstreckt. Der Rohranschluss ist derart ausgestaltet, dass beispielsweise ein Leerrohr an diesem angeordnet werden kann. Der mindestens eine Abschnitt ist ein Hülsenabschnitt und ist eine teilweise Fortführung des hülsenförmigen Körpers der zweiten Hülse.

In einer Ausführungsform erstreckt sich der Rohranschluss im Wesentlichen über den halben Umfang der zweiten Stirnseite und umfasst einen Basisabschnitt und zwei zu diesem benachbarte und beabstandete Seitenabschnitte, wobei die Abmessung entlang des Umfangs des Basisabschnittes ein Vielfaches der Abmessungen entlang des Umfangs der Seitenabschnitte ist. Dies ermöglicht die Anordnung von Leerrohren mit unterschiedlich grossen Querschnitten. Der Basisabschnitt gibt dem Rohranschluss die nötige Stabilität. Die Seitenabschnitte sind nachgiebig ausgebildet und können bei einem Rohr mit einem kleinen Querschnitt zusammengedrückt werden und können bei einem Rohr mit einem grossen Querschnitt auseinandergedrückt werden. Das Leerrohr lässt sich mit einer Rohrbefestigung, beispielsweise mit einem Kabelbinder oder dergleichen am Rohranschluss festmachen.

In einer Ausführungsform umfassen die Abschnitte des Rohranschlusses eine in Umfangsrichtung verlaufende Befestigungsnut. Die Befestigungsnut verhindert, dass der Kabelbinder, bevor oder nachdem er angezogen wurde, verrutschen kann.

In einer Ausführungsform umfasst die zweite Hülse eine in Umfangsrichtung verlaufende Trenn-Nut. Die Trenn-Nut erleichtert das Abtrennen eines hinteren Bereiches der zweiten Hülse, welcher die Rohrbefestigung und einen Teil des hülsenförmigen Körpers umfasst. Durch das Abtrennen des hinteren Bereiches verringert sich die Bautiefe der Montagehülse, wodurch sie sich auch bei geringen Platzverhältnissen einsetzen lässt.

Erfindungsgemäß ist das Spannelement an einem nach innen gerichteten Kragen an der ersten Hülse angeordnet und das Spannelement ist an einem nach innen gerichteten Rohr an der zweiten Hülse angeordnet. Durch die Anordnung auf der Innenseite der Montagehülse reduziert sich der Platzbedarf, wodurch die für die Montagehülse benötigte Wandausnehmung kleiner bemessen sein kann. Der Kragen und das Rohr ragen nur in einen kleinen Bereich des innenliegenden Querschnitts der Montagehülse, wodurch der grössere Teil des Querschnitts frei bleibt. Je grösser der freibleibende Querschnitt ist, desto mehr Platz steh für die Führung von Leitungen oder Kabel zur Verfügung.

In einer Ausführungsform umfasst der Kragen der ersten Hülse eine erste Bohrung und das Rohr der zweiten Hülse umfasst eine zweite Bohrung, wobei sich das Spannelement zumindest teilweise durch beide Bohrungen erstreckt. Alternativ kann sich das Spannelement vollständig durch beide Bohrungen erstrecken. Beispielsweise kann sich eine Schraube durch beide Bohrungen erstrecken, wobei der Schraubenkopf auf der Seite der ersten Bohrung angeordnet ist und das Gewinde auf der Seite der zweiten Bohrung. Beispielsweise kann bei der zweiten Bohrung eine Schraubenmutter eingelassen sein. Die Mutter kann aus Kunststoff oder Metall gefertigt sein.

In einer Ausführungsform umfasst die erste Bohrung eine Durchgangsbohrung und die zweite Bohrung umfasst eine Gewindebohrung. Der Bereich der Gewindebohrung kann aus einem festeren Material gefertigt sein. Beispielsweise kann die zweite Hülse mit einem Zwei-Komponenten-Spritzgussverfahren hergestellt werden.

In einer Ausführungsform ist am Kragen der ersten Hülse eine Zugentlastung angeordnet, welche sich vom Kragen aus entlang der Längsachse gegen den Flansch erstreckt. An der Zugentlastung kann ein Kabel eingehängt werden, wodurch verhindert werden kann, dass das Kabel aus der Montagehülse gezogen werden kann.

In einer Ausführungsform ist am Kragen der ersten Hülse, beabstandet zum hülsenförmigen Körper mindestens eine Raste vorgesehen, welche sich vom Kragen entlang der Längsachse gegen den Flansch erstreckt, wobei die Raste an ihrem freien Ende ein nach aussen gerichtetes Rastelement umfasst. Ein Bedienelement, welches in die Montagehülse einsetzbar ist, kann mit der Raste verrastbar sein. Es sind daher keine weiteren Befestigungsmittel wie Schrauben oder dergleichen nötig, wodurch der Zusammenbau sehr einfach wird. Es sind auch keine speziellen Werkzeuge nötig, um ein Bedienelement in der Montagehülse zu befestigen.

Eine erfindungsgemässe Bedienelement-Anordnung umfasst eine Montagehülse nach einer der vorangehenden Ausführungsformen und ein Bedienelement, wobei das Bedienelement mindestens ein nach innen gerichtetes Rastelement umfasst, welches mit der mindestens einen Raste der ersten Hülse verrastbar ist.

Ein erfindungsgemässes Verfahren zur Verwendung einer Montagehülse nach einer der vorangehenden

Ausführungsformen, umfasst die Schritte:
- Einführen der Montagehülse in eine in einer Wand dafür vorgesehenen Ausnehmung; und
- Anziehen des Spannelements.

Ist das Spannelement eine Schraube, so kann das Anziehen durch das Drehen der Schraube im Uhrzeigersinn erfolgen.

In einer Ausführungsform umfasst das Verfahren zusätzlich den Schritt:
- Durchtrennen der zweiten Hülse bei der Trenn-Nut.

In einer Ausführungsform umfasst das Verfahren zusätzlich den Schritt:
- Befestigen eines Leerrohres mit einer Rohrbefestigung an der Befestigungsnut der zweiten Hülse.

In einer Ausführungsform umfasst das Verfahren zusätzlich den Schritt:
- Durchführen eines Kabels durch die beiden Hülsen der Montagehülse.

In einer Ausführungsform umfasst das Verfahren zusätzlich die Schritte:
- Verbinden eines Bedienelements mit dem Kabel; und
- Anordnen des Bedienelements in der Montagehülse.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Explosionsansicht einer erfindungsgemässen Montagehülse mit Leerrohr, Rohrbefestigung, Kabel und Bedienelement;
Fig. 2 eine perspektivische Ansicht der zusammengebauten Montagehülse der Figur 1;
Fig. 3 eine seitliche Schnittansicht durch die Längsachse der Montagehülse der Figur 2;
Fig. 4 eine perspektivische Hinteransicht einer ersten Hülse der Figur 3;
Fig. 5 eine perspektivische Vorderansicht der ersten Hülse der Figur 3;
Fig. 6 eine perspektivische Hinteransicht einer zweiten Hülse der Figur 3; und
Fig. 7 eine perspektivische Vorderansicht der zweiten Hülse der Figur 3.

### DETAILLIERTE BESCHREIBUNG DER ERFINDUNG

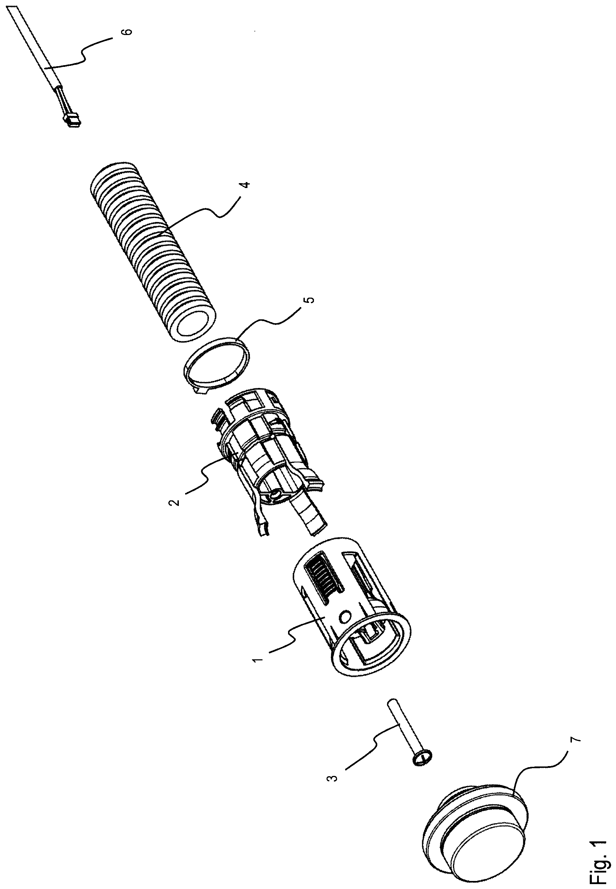

Die Figur 1 zeigt eine perspektivische Explosionsansicht einer erfindungsgemässen Montagehülse 1, 2, 3 mit einem Leerrohr 4, einer Rohrbefestigung 5, einem Kabel 6 und einem Bedienelement 7. Eine zweite Hülse 2 ist in eine erste Hülse 1 einführbar und die beiden Hülsen 1, 2 sind mit einem Spannelement 3 verspannbar, wobei das dargestellte Spannelement 3 eine Schraube ist.

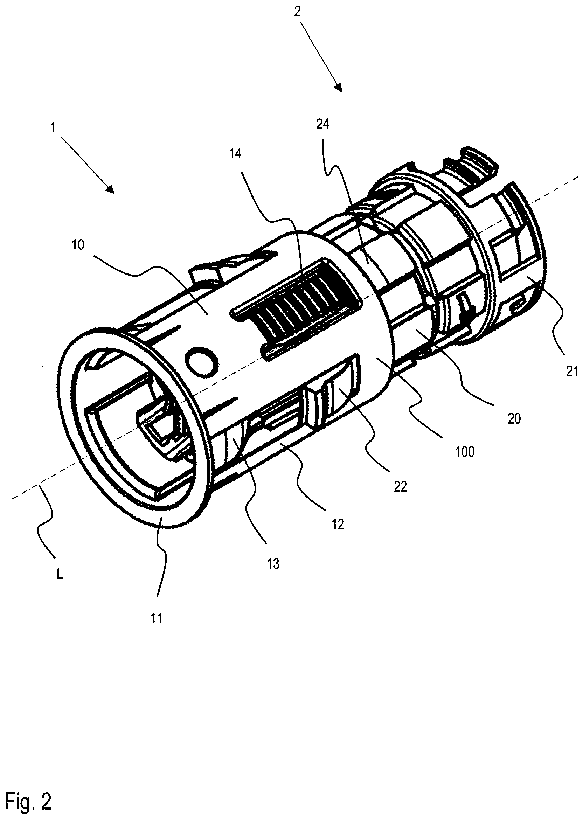

Die Figur 2 zeigt eine perspektivische Ansicht der zusammengebauten Montagehülse der Figur 1. Die zweite Hülse 2 ist entlang der Längsachse L verschiebbar in der ersten Hülse 1 angeordnet. Die beiden Hülsen umfassen jeweils einen hülsenförmigen Körper 10, 20, mit einem im Wesentlichen kreisförmigen Querschnitt. Am vorderen freien Ende der ersten Hülse 1 ist ein Flansch 11 angeordnet. In der ersten Hülse 1 ist ein Schlitz 12 ausgeformt, welcher sich entlang der Längsachse L erstreckt. Auf der Seite des Flansches 11 ist der Schlitz 12 durch eine Rampe 13 begrenzt und auf der gegenüberliegenden Seite durch einen Steg 100. Dargestellt sind drei Schlitze, welche gleichmässig verteilt, d.h. alle 120 Grad, am Umfang angeordnet sind. Zwischen zwei benachbarten Schlitzen 12 ist ein erstes Klemmelement 14 in der Form einer Lasche ausgebildet. Die Lasche 14 ist einstückig mit dem hülsenförmigen Körper 10 ausgebildet. Die Lasche 14 ist mit ihrem vorderen Ende mit dem Körper 10 verbunden und hat ihr freies Ende an ihrem gegenüberliegenden hinteren Ende. Dargestellt sind drei Laschen 14, welche jeweils zwischen zwei Schlitzen 12, gleichmässig verteilt am Umfang angeordnet sind. Jeweils ein zweites Klemmelement 22 der zweiten Hülse 2 ist mit einem Schlitz 12 der ersten Hülse 1 ausgerichtet. Jedes zweite Klemmelement 22 ist eine Lasche und ragt mit ihrem vorderen freien Ende durch den Schlitz 12 über den Körper 10 der ersten Hülse 1. Jedes zweite Klemmelement 22 ist mit seinem hinteren Ende mit dem hülsenförmigen Körper 20 der zweiten Hülse 2 verbunden und einstückig ausgebildet. Jeweils ein Keil 24 der zweiten Hülse 2 ist mit dem ersten Klemmelement 14 der ersten Hülse 1 ausgerichtet. Im hinteren Bereich der zweiten Hülse 2 ist ein Rohranschluss 21 vorgesehen.

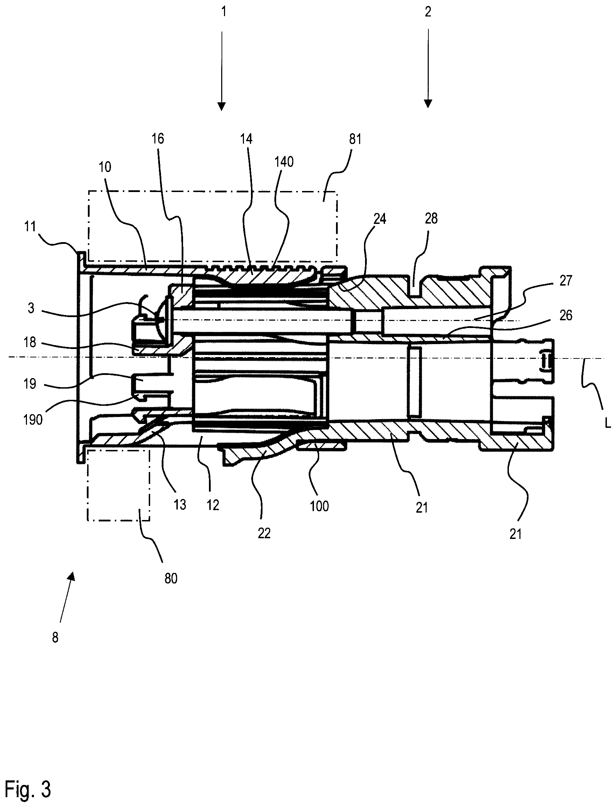

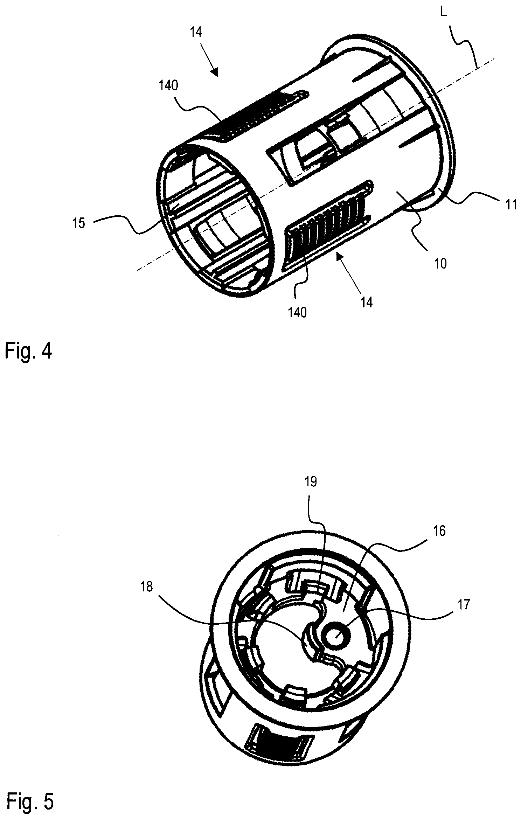

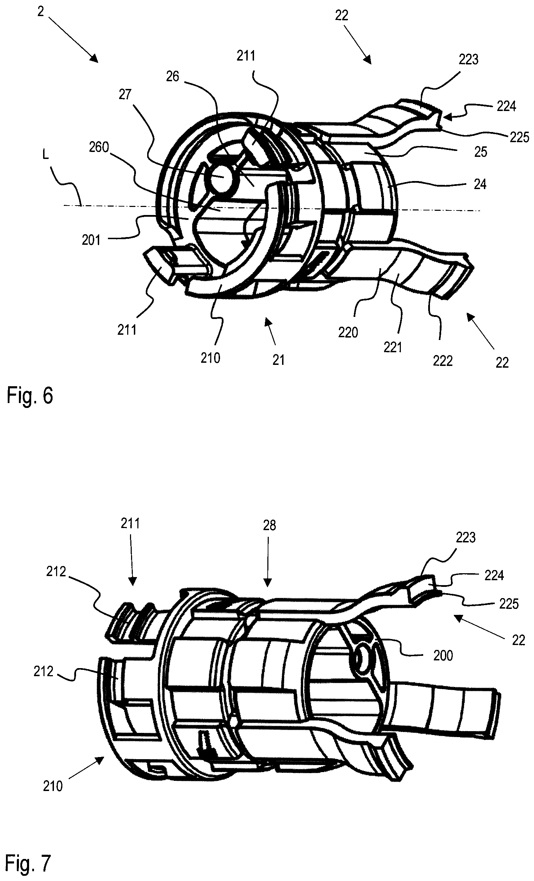

Die Figur 3 zeigt eine seitliche Schnittansicht durch die Längsachse der Montagehülse der Figur 2, welche beispielsweise in einer Leichtbauwand 80 oder in einer Massivbauwand 81 angeordnet werden kann. Die Figuren 4 und 5 zeigen perspektivische Ansichten der ersten Hülse 1 der Figur 3 und die Figuren 6 und 7 zeigen perspektivische Ansichten der zweiten Hülse 2 der Figur 3. Die zweite Hülse 2 ist soweit entlang der Längsachse L in die erste Hülse 1 eingeschoben, dass ein Spannelement 3 in der Form einer Schraube auf ihrer Seite mit dem Schraubenkopf an der ersten Hülse angreifen kann und auf ihrer Gewindeseite an der zweiten Hülse angreifen kann. An der ersten Hülse 1 greift die Schraube 3 an einem Kragen 16 an, welcher sich vom ersten Hülsenkörper 10 im Wesentlichen senkrecht zur Längsachse L gegen das Hülseninnere erstreckt. Der Kragen 16 ist bezüglich der Hülsenmitte etwas nach vorne zum Flansch 11 versetzt angeordnet. Die Schraube 3 ist in einer Durchgangsbohrung 17 am Kragen 16 angeordnet, welche in einer gegen die Längsachse gerichteten Auswölbung des Kragens 16 angeordnet ist. Am gegen die Längsachse L gerichteten Ende der Auswölbung ist eine Zugentlastung 18 angeordnet, welche gemeinsam einstückig mit dem Kragen 16 ausgebildet ist. Die Zugentlastung 16 umfasst eine Lasche, welche sich vom Kragen 16 gegen den Flansch 11 entlang der Längsachse L erstreckt. In einem gegen die Längsachse L gerichteten Bereich des Kragens 16 sind Rasten 19 ausgebildet. Die Rasten 19 sind laschenförmig, sind am hinteren Ende am Kragen angeordnet und einstückig mit diesem ausgebildet und erstrecken sich nach vorne entlang der Längsachse L. Am vorderen Ende umfassen die Rasten 19 ein nach aussen gerichtetes Rastelement 190 in der Form einer Rastnase. Das erste Klemmelement 14 erstreckt sich im Wesentlichen von der Hülsenmitte bis nahezu zum hinteren Ende der ersten Hülse 1. Das erste Klemmelement 14 weist auf seiner Aussenseite Rippen 140 auf, welche sich entlang des Umfangs erstrecken. Das erste Klemmelement 14 weist bezüglich dem ersten Hülsenkörper 10 eine Verdickung auf, d.h. die Wandstärke des ersten Klemmelements ist etwa doppelt so dick wie die Wandstärke des ersten Hülsenkörpers. Am Umfang gegenüberliegend zum ersten Klemmelement 14 ist der Schlitz 12 im ersten Hülsenkörper ausgebildet. Der Schlitz 12 erstreckt sich von etwa vom vorderen Viertel bis etwas über den hinteren Viertel der ersten Hülse, wodurch am hinteren Ende der ersten Hülse 1 ein Steg 100 gebildet wird. Am vorderen Ende des Schlitzes erstreckt sich eine Rampe 13 vom Hülsenkörper an gegen das Hülseninnere. In der zweiten Hülse 2 ist ein Rohr 26 ausgebildet, welches sich entlang der Längsachse L beabstandet zum zweiten Hülsenkörper 20 in dessen Inneren zwischen einer vorderen ersten Stirnseite 200 und einer hinteren zweiten Stirnseite 201 erstreckt, wobei das Rohr 26 mit Stegen 260 mit dem zweiten Hülsenkörper 20 verbunden ist. Das Rohr weist eine zweite Bohrung 27 auf, welche im vorderen Bereich ein Gewinde umfasst, in welches die Schraube 3 eingeschraubt werden kann. Im hinteren Bereich der zweiten Hülse 2 ist der Rohranschluss 21 angeordnet. Der Rohranschluss umfasst einen Teil einer nach aussen abgesetzten Hülse, welche in drei Abschnitte 210, 211, 212 unterteilt ist. Ein Basisabschnitt 210 erstreckt sich über im Wesentlichen einen Viertel des Umfangs in einem dem Rohr 26 gegenüberliegenden Bereich. Ein Seitenabschnitt 211 ist auf jeder Seite, am Umfang beabstandet zum Basisabschnitt 210 angeordnet. Die Seitenabschnitte 211 erstrecken sich am Umfang bis etwas mehr als zur Hälfte des vollen Umfanges. Beabstandet zum hinteren Ende der Abschnitte des Rohranschlusses ist entlang des äusseren Umfangs eine nach innen gerichtete Befestigungsnut 212 ausgebildet. Das zweite Klemmelement 22 erstreckt sich von der ersten Stirnseite 200 S-förmig entlang der Längsachse L nach vorne. Das zweite Klemmelement umfasst einen ersten Abschnitt 220, welcher sich von der ersten Stirnseite 200 an erstreckt und welcher im Querschnitt eine Fortführung des Querschnitts des zweiten Hülsenkörpers 20 darstellt. In diesem Abschnitt bleibt der Abstand des zweiten Klemmelements zur Längsachse entlang der Längsachse gleich. Ein zweiter Abschnitt 221 schliesst an den ersten Abschnitt 220 an, wobei in diesem Abschnitt nimmt der Abstand des zweiten Klemmelements zur Längsachse entlang der Längsachse kontinuierlich zu. Ein dritter Abschnitt 222 schliesst an den zweiten Abschnitt 221 an, wobei in diesem Abschnitt der Abstand des zweiten Klemmelements zur Längsachse entlang der Längsachse gleichbleibt. Am vorderen freien Ende des zweiten Klemmelements 22 ist ein Axialanschlag 223 angeordnet, welcher als lokale radiale Verdickung des dritten Abschnitts 222 ausgebildet ist. An der endseitigen Stirnseite 224 des dritten Abschnitts 222 ist ein Radialanschlag 225 angeordnet, welcher als Erhebung ausgebildet ist, welche sich von der gegen die Längsachse gerichteten Kante der endseitigen Stirnseite 224 mit einer Dicke entlang der Längsachse L erstreckt, wobei die Dicke des Radialanschlags 225 ein Bruchteil der Dicke des Axialanschlags 223 aufweist. Zwischen jeweils zwei zweiten Klemmelementen 22 ist ein Keil 24 angeordnet. D.h. bei drei zweiten Klemmelementen ist jeder Keil 24 am Umfang einem zweiten Klemmelement 22 gegenüberliegend angeordnet. Der Keil erstreckt sich von der ersten Stirnseite 200 an nach hinten entlang der Längsachse L, wobei die radiale Ausdehnung des Keils bei der ersten Stirnseite 200 am geringsten ist. Wenn die Montagehülse zusammen mit einer Leichtbauwand 80 oder einer Massivbauwand 81 verwendet wird, so kann die Montagehülse in eine entsprechende Ausnehmung eingeführt werden, bis der Flansch 11 an der Wand 80 anschlägt. Die zweiten Klemmelemente 22 der zweiten Hülse 2 sind elastisch ausgebildet, und werden durch die Wand 80 durch die Schlitze 12 der ersten Hülse 1 nach innen gedrückt. Anschliessend kann die Schraube 3 mit einem entsprechenden Schraubenzieher im Uhrzeigersinn gedreht werden, wodurch die zweite Hülse 2 nach vorn in der Richtung der ersten Hülse 1 verschoben wird. Wird die Montagehülse mit einer Leichtbauwand 80 verwendet, so hat das erste Klemmelement 14 praktisch keine oder keine radiale Klemmwirkung, wenn das erste Klemmelement 14, im eingeführten Zustand der Montagehülse hinter der entsprechenden Wand 80 liegt. Wird die Schraube 3 angezogen, so verschiebt sich das zweite Klemmelement 22 entlang der Längsachse L im Wesentlichen ungehindert, bis es an die innenliegende Oberfläche der Leichtbauwand 81 anschlägt. Wird die Schraube 3 weiter angezogen, so wird das zweite Klemmelement 22 in der Längsrichtung gegen die Wand 80 verspannt. Die an der endseitigen Stirnseite 224 des zweiten Klemmelements 22 angeordneten Radialanschläge 225 können von hinten in die Bohrung in der Wand 80 eingreifen und verhindern, dass die zweiten Klemmelemente 22 beim Verspannen nach aussen gedrückt werden, wodurch die Klemmwirkung verbessert wird. Wenn die Montagehülse aus einer Leichtbauwand 80 entfernt werden soll, so kann die Schraube 3 gelöst werden, wodurch die zweiten Klemmelemente 22 nach hinten verschoben werden. Ist die Schraube 3 nahezu vollständig gelöst, so werden die zweiten Klemmelemente 22 der zweiten Hülse 2 durch die Stege 100 durch die entsprechenden Schlitze 12 der ersten Hülse 1 nach innen gedrückt, wodurch die zweiten Klemmelemente 22 nicht mehr über den Körper 10 der ersten Hülse 1 ragen und die Montagehülse im Wesentlichen ungehindert aus der Wandbohrung entfernt werden kann. Wird die Montagehülse mit einer Massivbauwand 81 verwendet, so hat das erste Klemmelement 14 eine radiale Klemmwirkung und das zweite Klemmelement 22 hat einer axiale und eine mehr oder weniger grosse radiale Klemmwirkung. Beim Einführen der Montagehülse in eine Wandbohrung werden die zweiten Klemmelemente 22 durch die Wand 80 durch die Schlitze 12 der ersten Hülse 1 nach innen gedrückt, wodurch eine erste Klemmwirkung in der Bohrung erzeugt wird. Wird die Schraube 3 angezogen, so verschiebt sich die zweite Hülse 2 nach vorne. Da die zweiten Klemmelemente 22, bzw. die Axialanschläge 223 der zweiten Klemmelemente 22 von innen gegen die Bohrung drücken, wird der Flansch 11 gegen die Wand 81 gezogen, wenn die Schraube 3 angezogen wird, wodurch der Sitz der Montagehülse in der Wandausnehmung, bzw. der Bohrung verbessert wird. Wird die Schraube 3 weiter angezogen, so werden die Keile 24 der zweiten Hülse 2 unter die entsprechenden ersten Klemmelemente 14 der ersten Hülse 1 geschoben, wodurch die ersten Klemmelemente 14 radial nach aussen gedrückt werden und die Montagehülse in der Wandbohrung verklemmt wird. Wird die Schraube 3 noch weiter angezogen, so werden die zweiten Klemmelemente 22 der zweiten Hülse 2 über die entsprechenden Rampen 13 der ersten Hülse 1 geschoben, wodurch die zweiten Klemmelemente 22 radial nach aussen gedrückt werden und die Montagehülse zusätzlich in der Wandbohrung verklemmt wird. Wenn die Montagehülse aus der Bohrung der Massivbauwand entfernt werden soll, so kann die Schraube im Gegenuhrzeigersinn gelöst werden, wodurch die zweite Hülse 2 nach hinten verschoben wird, wodurch die Keile 24 nicht mehr auf die ersten Klemmelemente 14 einwirken und wodurch die Rampen 13 nicht mehr auf die zweiten Klemmelemente 22 einwirken und die Klemmwirkung im Wesentlichen entfällt. Wird die Schraube weiter gelöst, so werden die zweiten Klemmelemente 22 unter die Stege 100 der ersten Hülse 1 geschoben, wodurch die zweiten Klemmelemente 22 innerhalb des Körpers 10 der ersten Hülse 1 zu liegen kommen und auch keine Klemmwirkung mit der Bohrung mehr erzeugen. Die Montagehülse kann dann einfach und mit geringem Kraftaufwand aus der Bohrung entfernt werden.

**BEZUGSZEICHENLISTE**

| | | | |
|---|---|---|---|
| 1 | erste Hülse | 22 | zweites Klemmelement |
| 10 | Körper | 220 | erster Abschnitt |
| 100 | Steg | 221 | zweiter Abschnitt |
| 11 | Flansch | 222 | dritter Abschnitt |
| 12 | Schlitz | 223 | Axialanschlag |
| 13 | Rampe | 224 | endseitige Stirnseite |
| 14 | erstes Klemmelement | 225 | Radialanschlag |
| 140 | Rippe | 24 | Keil |
| 15 | Führungssteg | 25 | Führungsnut |
| 16 | Kragen | 26 | Rohr |
| 17 | erste Bohrung | 260 | Steg |
| 18 | Zugentlastung | 27 | zweite Bohrung |
| 19 | Raste | 28 | Trenn-Nut |
| 190 | Rastelement | 3 | Spannelement |
| 2 | zweite Hülse | 4 | Leerrohr |
| 20 | Körper | 5 | Rohrbefestigung |
| 200 | erste Stirnseite | 6 | Kabel |
| 201 | zweite Stirnseite | 7 | Bedienelement |
| 21 | Rohranschluss | 8 | Wand |
| 210 | Basisabschnitt | 80 | Leichtbauwand |
| 211 | Seitenabschnitt | 81 | Massivbauwand |
| 212 | Befestigungsnut | L | Längsachse |

## Patentansprüche

1. Eine Montagehülse zur Montage in einer Ausnehmung in einer Wand (8) umfassend eine erste Hülse (1) mit einer Längsachse (L), wobei im Bereich eines ersten freien Endes der ersten Hülse (1) ein Flansch (11) angeordnet ist, welcher radial nach aussen über den Umfang des hülsenförmigen Körpers (10) ragt, wodurch er an einer Aussenseite der Wand (8) anschlagen kann, wobei die Montagehülse eine zweite Hülse (2) umfasst, welche entlang der Längsachse (L) verschiebbar in der ersten Hülse (1) angeordnet ist und wobei die Montagehülse ein Spannelement (3) umfasst, mit welchem die beiden Hülsen (1, 2) von einer entspannten Stellung in eine verspannte Stellung bringbar sind, wobei die erste Hülse (1) und die zweite Hülse (2) mindestens ein Klemmelement (14, 22) umfassen, welches in der verspannten Stellung radial nach aussen über den Umfang des Körpers (10) der ersten Hülse (1) ragt, wodurch eine Verspannung der Montagehülse mit der Wand (8) erreichbar ist, wobei mindestens ein erstes Klemmelement (14) der ersten Hülse (1) mit zunehmender Verspannung zunehmend über den Umfang des Körpers (10) der ersten Hülse (1) ragt, wodurch eine radiale Verspannung der Montagehülse mit der Ausnehmung der Wand (8) erreichbar ist, wobei mindestens ein zweites Klemmelement (22) der zweiten Hülse (2) mit zunehmender Verspannung in einem vorbestimmten Bereich gleichbleibend über den Umfang des Körpers (10) der ersten Hülse (1) ragt, wodurch eine Verspannung entlang der Längsachse (L) der Montagehülse zumindest mit einer Innenseite der Wand (8) erreichbar ist, wobei die erste Hülse (1) mindestens einen Schlitz (12) umfasst, welcher sich entlang der Längsachse (L) erstreckt, und durch welchen das zweite Klemmelement (22) nach aussen ragen kann, wobei die zweite Hülse (2) mindestens einen Keil (24) umfasst, welcher mit einer zunehmenden Verspannung der beiden Hülsen (1, 2) das erste Klemmelement (14) zunehmend radial nach aussen auslenken kann und/oder wobei die erste Hülse (1) mindestens eine Rampe (13) umfasst, welche das zweite Klemmelement (22) gegen die verspannte Stellung hin, zunehmend radial nach aussen auslenken kann und wobei das Spannelement (3) an einem nach innen gerichteten Kragen (16) an der ersten Hülse (1) angeordnet ist und an einem nach innen gerichteten Rohr (26) an der zweiten Hülse (2) angeordnet ist.

2. Die Montagehülse nach Anspruch 1, wobei die erste Hülse (1) einen in der Richtung der Längsachse (L) an den Schlitz (12) anschliessenden, dem Flansch (11) gegenüberliegenden Steg (100) umfasst, welcher in der entspannten Stellung eine radial nach innen gerichtete Kraftkomponente auf das zweite Klemmelement (22) ausüben kann.

3. Die Montagehülse nach Anspruch 1 oder 2, wobei das erste Klemmelement (14) eine Lasche umfasst, welche einstückig mit der ersten Hülse (1) ausgebildet ist und sich entlang der Längsachse (L) erstreckt und deren freies Ende sich auf der dem Flansch (11) gegenüberliegenden Seite befindet.

4. Die Montagehülse nach Anspruch 3, wobei das erste Klemmelement (14) Rippen (140) umfasst, welche sich quer zur Längsachse (L) erstrecken.

5. Die Montagehülse nach einem der vorangehenden Ansprüche, wobei das zweite Klemmelement (22) eine Lasche umfasst, welche einstückig mit der zweiten Hülse (2) ausgebildet ist und sich im Wesentlichen entlang der Längsachse (L) erstreckt und deren freies Ende sich im Zusammenbau mit der ersten Hülse (1) auf der dem Flansch (11) zugewandten Seite der zweiten Hülse (2) befindet.

6. Die Montagehülse nach Anspruch 5, wobei das zweite Klemmelement (22) S-förmig ausgebildet ist, einen ersten Abschnitt (220) umfasst, der an einer ersten Stirnseite (200) des Körpers (20) der zweiten Hülse (2) anschliesst und in welchem der Abstand des zweiten Klemmelements (22) von der Längsachse (L) entlang der Längsachse (L) im Wesentlichen gleich bleibt, einen zweiten Abschnitt (221) umfasst, der an den ersten Abschnitt (220) anschiesst und in welchem der Abstand des zweiten Klemmelements (22) von der Längsachse (L) entlang der Längsachse (L) stetig zunimmt und einen dritten Abschnitt (222) umfasst, der an den zweiten Abschnitt (221) anschliesst und in welchem der Abstand des zweiten Klemmelements (22) von der Längsachse (L) entlang der Längsachse (L) im Wesentlichen gleich bleibt.

7. Die Montagehülse nach Anspruch 5 oder 6, wobei am freien Ende des zweiten Klemmelements (22) ein Axialanschlag (223) vorgesehen ist, welcher als eine radiale Verdickung des freien Endes ausgebildet ist.

8. Die Montagehülse nach einem der Ansprüche 5 bis 7, wobei am freien Ende des zweiten Klemmelements (22) ein Radialanschlag (225) vorgesehen ist, welcher sich in Umfangrichtung über einen Teilbereich einer endseitigen Stirnseite (224) des zweiten Klemmelements (22) erstreckt.

9. Die Montagehülse nach einem der vorangehenden Ansprüche, wobei an einer zweiten Stirnseite (201) des Körpers (20) der zweiten Hülse (2) ein Rohranschluss (21) vorgesehen ist, welcher mindestens einen Abschnitt (210, 211) umfasst, der sich in einem umfangnahen Bereich von der zweiten Stirnseite (201) aus entlang der Längsachse (L) erstreckt.

10. Die Montagehülse nach Anspruch 9, wobei sich der Rohranschluss (21) im Wesentlichen über den halben Umfang der zweiten Stirnseite (201) erstreckt und einen Basisabschnitt (210) und zwei zu diesem benachbarte und beabstandete Seitenabschnitte (211) umfasst, wobei die Abmessung entlang des Umfangs des Basisabschnittes (210) ein Vielfaches der Abmessungen entlang des Umfangs der Seitenabschnitte (211) ist.

11. Die Montagehülse nach Anspruch 9 oder 10, wobei die Abschnitte (210, 211) des Rohranschlusses (21) eine in Umfangsrichtung verlaufende Befestigungsnut (212) umfassen.

12. Die Montagehülse nach einem der vorangehenden Ansprüche, wobei die zweite Hülse (2) eine in Umfangsrichtung verlaufende Trenn-Nut (28) umfasst.

13. Die Montagehülse nach Anspruch 1, wobei der Kragen (16) der ersten Hülse (1) eine erste Bohrung (17) umfasst und wobei das Rohr (26) der zweiten Hülse (2) eine zweite Bohrung (27) umfasst, wobei sich das Spannelement (3) zumindest teilweise durch beide Bohrungen (17, 27) erstreckt.

14. Die Montagehülse nach Anspruch 13, wobei die erste Bohrung (17) eine Durchgangsbohrung umfasst und wobei die zweite Bohrung (27) eine Gewindebohrung umfasst.

15. Die Montagehülse nach einem der vorangehenden Ansprüche, wobei am Kragen (16) der ersten Hülse (1) eine Zugentlastung (18) angeordnet ist, welche sich vom Kragen aus (16) entlang der Längsachse (L) gegen den Flansch (11) erstreckt.

16. Die Montagehülse nach einem der vorangehenden Ansprüche, wobei am Kragen (16) der ersten Hülse (1), beabstandet zum hülsenförmigen Körper (20) mindestens eine Raste (19) vorgesehen ist, welche sich vom Kragen (16) entlang der Längsachse (L) gegen den Flansch (11) erstreckt, wobei die Raste (19) an ihrem freien Ende ein nach aussen gerichtetes Rastelement (190) umfasst.

17. Eine Bedienelement-Anordnung umfassend eine Montagehülse nach einem der vorangehenden Ansprüche und ein Bedienelement (7), wobei das Bedienelement (7) mindestens ein nach innen gerichtetes Rastelement umfasst, welches mit der mindestens einen Raste (19) der ersten Hülse (1) verrastbar ist.

18. Ein Verfahren zur Verwendung einer Montagehülse nach einem der Ansprüche 1 bis 16, umfassend die Schritte:
- Einführen der Montagehülse in eine in einer Wand (8) dafür vorgesehenen Ausnehmung; und
- Anziehen des Spannelements (3).

19. Das Verfahren nach Anspruch 18, zusätzlich umfassend den Schritt:
- Durchtrennen der zweiten Hülse (2) bei der Trenn-Nut (28).

20. Das Verfahren nach Anspruch 18, zusätzlich umfassend den Schritt:
- Befestigen eines Leerrohres (4) mit einer Rohrbefestigung (5) an der Befestigungsnut (212) der zweiten Hülse (2).

21. Das Verfahren nach einem der Ansprüche 18 bis 20, zusätzlich umfassend den Schritt:
- Durchführen eines Kabels (6) durch die beiden Hülsen (1, 2) der Montagehülse.

22. Das Verfahren nach Anspruch 21, zusätzlich umfassend die Schritte:
- Verbinden eines Bedienelements (7) mit dem Kabel (6); und
- Anordnen des Bedienelements (7) in der Montagehülse.

## Claims

1. An mounting sleeve for mounting in a recess in a wall (8), comprising a first sleeve (1) having a longitudinal axis (L), wherein a flange (11) is arranged in the region of a first free end of the first sleeve (1), which projects radially outwardly beyond the circumference of the sleeve-shaped body (10), as a result of which it can abut against an outside of the wall (8), wherein the mounting sleeve comprises a second sleeve (2), which is arranged displaceably along the longitudinal axis (L) in the first sleeve (1), and wherein the mounting sleeve comprises a tensioning element (3) with which the two sleeves (1, 2) can be brought from a non-tensioned position into a tensioned position, wherein the first sleeve (1) and the second sleeve (2) comprising at least one clamping element (14, 22) which, in the tensioned position, projects radially outwards beyond the circumference of the body (10) of the first sleeve (1), as a result of which tensioning of the mounting sleeve with the wall (8) can be achieved, wherein at least one first clamping element (14) of the first sleeve (1) projecting increasingly beyond the circumference of the body (10) of the first sleeve (1) with increasing tensioning, whereby radial tensioning of the mounting sleeve with the recess of the wall (8) is achievable, wherein at least one second clamping element (22) of the second sleeve (2), with increasing tensioning, projects in a predetermined range constantly beyond the circumference of the body (10) of the first sleeve (1), as a result of which tensioning along the longitudinal axis (L) of the mounting sleeve can be achieved at least with an inner side of the wall (8), wherein the first sleeve (1) comprises at least one slot (12) extending along the longitudinal axis (L), through which the second clamping element (22) can protrude outwardly, wherein the second sleeve (2) comprises at least one wedge (24) which, with increasing tensioning of the two sleeves (1, 2), can deflect the first clamping element (14) increasingly radially outwards, and/or wherein the first sleeve (1) comprises at least one ramp (13) which can deflect the second clamping element (22) increasingly radially outwards towards the tensioned position, and wherein the tensioning element (3) is arranged on an inwardly directed collar (16) on the first sleeve (1) and wherein the tensioning element (3) is arranged on an inwardly directed tube (26) on the second sleeve (2).

2. The mounting sleeve according to claim 1, wherein the first sleeve (1) comprises a web (100) which adjoins the slot (12) in the direction of the longitudinal axis (L) and is opposite the flange (11) and which, in the non-tensioned position, can exert a radially inwardly directed force component on the second clamping element (22).

3. The mounting sleeve according to one of the preceding claims, wherein the first clamping element (14) comprises a lug which is integrally formed with the first sleeve (1) and extends along the longitudinal axis (L) and whose free end is located on the side opposite the flange (11).

4. The mounting sleeve according to claim 3, wherein the first clamping element (14) comprises ribs (140) extending transversely to the longitudinal axis (L).

5. The mounting sleeve according to one of the preceding claims, wherein the second clamping element (22) comprises a lug which is integrally formed with the second sleeve (2) and extends substantially along the longitudinal axis (L) and whose free end, when assembled with the first sleeve (1), is located on the side of the second sleeve (2) facing the flange (11).

6. The mounting sleeve according to claim 5, wherein the second clamping element (22) is S-shaped, comprises a first section (220) which adjoins a first end face (200) of the body (20) of the second sleeve (2) and in which the distance of the second clamping element (22) from the longitudinal axis (L) remains substantially the same along the longitudinal axis (L), comprises a second section (221) which adjoins the first section (220) and in which the distance of the second clamping element (22) from the longitudinal axis (L) increases continuously along the longitudinal axis (L), and comprises a third section (222) which adjoins the second section (221) and in which the distance of the second clamping element (22) from the longitudinal axis (L) remains substantially the same along the longitudinal axis (L).

7. The mounting sleeve according to claim 5 or 6, wherein an axial stop (223) is provided at the free end of the second clamping element (22), which is formed as a radial thickening of the free end.

8. The mounting sleeve according to any one of claims 5 to 7, wherein a radial stop (225) is provided at the free end of the second clamping element (22), which radial stop (225) extends in the circumferential direction over a partial region of an end-side face (224) of the second clamping element (22).

9. The mounting sleeve according to any one of the preceding claims, wherein a tube connection (21) is provided at a second end face (201) of the body (20) of the second sleeve (2), which tube connection (21) comprises at least one section (210, 211) which extends in a region close to the circumference from the second end face (201) along the longitudinal axis (L).

10. The mounting sleeve of claim 9, wherein the tube connection (21) extends substantially halfway around the circumference of the second end face (201) and comprises a base section (210) and two side sections (211) adjacent and spaced apart therefrom, wherein the dimension along the circumference of the base section (210) is a multiple of the dimensions along the circumference of the side sections (211) .

11. The mounting sleeve of claim 9 or 10, wherein the sections (210, 211) of the tube connection (21) comprise a fixing groove (212) extending in the circumferential direction.

12. The mounting sleeve according to any one of the preceding claims, wherein the second sleeve (2) comprises a separation groove (28) extending in the circumferential direction.

13. The mounting sleeve according to claim 1, wherein the collar (16) of the first sleeve (1) comprises a first bore (17) and wherein the tube (26) of the second sleeve (2) comprises a second bore (27), wherein the tensioning element (3) extends at least partially through both bores (17, 27).

14. The mounting sleeve of claim 13, wherein the first bore (17) comprises a through hole and wherein the second hole (27) comprises a threaded bore.

15. The mounting sleeve according to any one of the preceding claims, wherein a strain relief (18) is arranged on the collar (16) of the first sleeve (1), which extends from the collar (16) along the longitudinal axis (L) towards the flange (11).

16. The mounting sleeve according to any one of the preceding claims, wherein at least one detent (19) is provided on the collar (16) of the first sleeve (1), spaced from the sleeve-shaped body (20), which extends from the collar (16) along the longitudinal axis (L) towards the flange (11), wherein the detent (19) comprises an outwardly directed detent element (190) at its free end.

17. An operating element arrangement comprising a mounting sleeve according to any one of the preceding claims and an operating element (7), wherein the operating element (7) comprises at least one inwardly directed detent element which is latchable with the at least one detent (19) of the first sleeve (1).

18. A method for using a mounting sleeve according to one of claims 1 to 16, comprising the steps of:
- inserting the mounting sleeve into a recess provided for this purpose in a wall (8); and
- tightening the tensioning element (3).

19. The method according to claim 18, additionally comprising the step of:
- Severing the second sleeve (2) at the separation groove (28).

20. The method according to claim 18, additionally comprising the step of:
- fastening an empty tube (4) with a tube fastener (5) to the fixing groove (212) of the second sleeve (2).

21. The method according to one of claims 18 to 20, additionally comprising the step of:
- feeding a cable (6) through the two sleeves (1, 2) of the mounting sleeve.

22. The method according to claim 21, additionally comprising the steps of:
- connecting an operating element (7) with the cable (6); and
- arranging the operating element (7) in the mounting sleeve.

## Revendications

1. Un manchon de montage pour le montage dans un évidement d'une paroi (8), comprenant un premier manchon (1) ayant un axe longitudinal (L), dans lequel une bride (11) est disposée dans la région d'une première extrémité libre du premier manchon (1), qui fait saillie radialement vers l'extérieur au-delà de la circonférence du corps en forme de manchon (10), de sorte qu'il peut s'appuyer contre un côté extérieur de la paroi (8), dans lequel le manchon de montage comprend un deuxième manchon (2), qui est disposé de manière déplaçable le long de l'axe longitudinal (L) dans le premier manchon (1), et dans lequel le manchon de montage comprend un élément de tension (3) avec lequel les deux manchons (1, 2) peuvent être mis d'une position non tendue à une position tendue, le premier manchon (1) et le deuxième manchon (2) comprenant au moins un élément de serrage (14, 22) qui, dans la position tendue, fait saillie radialement vers l'extérieur au-delà de la circonférence du corps (10) du premier manchon (1), ce qui permet d'obtenir une tension du manchon de montage avec la paroi (8), dans lequel au moins un premier élément de serrage (14) du premier manchon (1) dépasse de plus en plus de la circonférence du corps (10) du premier manchon (1) avec une tension croissante, ce qui permet d'obtenir une tension radiale du manchon de montage avec l'évidement de la paroi (8), dans lequel au moins un deuxième élément de serrage (22) du deuxième manchon (2), avec une tension croissante, dépassant dans une zone prédéterminée constamment la circonférence du corps (10) du premier manchon (1), ce qui permet d'obtenir une tension le long de l'axe longitudinal (L) du manchon de montage au moins avec un côté intérieur de la paroi (8), dans lequel le premier manchon (1) comprend au moins une fente (12) s'étendant le long de l'axe longitudinal (L), à travers laquelle le deuxième élément de serrage (22) peut faire saillie vers l'extérieur, dans lequel le deuxième manchon (2) comprend au moins une cale (24) qui, en cas de tension croissante des deux manchons (1, 2), peut dévier le premier élément de serrage (14) de plus en plus radialement vers l'extérieur, et/ou dans lequel le premier manchon (1) comprend au moins une rampe (13) qui peut dévier le deuxième élément de serrage (22) de plus en plus radialement vers l'extérieur en direction de la position tendue, et dans lequel l'élément de tension (3) est disposé sur un collet (16) dirigé vers l'intérieur sur le premier manchon (1) et dans lequel l'élément de tension (3) est disposé sur un tube (26) dirigé vers l'intérieur sur le deuxième manchon (2).

2. Le manchon de montage selon la revendication 1, dans lequel le premier manchon (1) comprend une âme (100) qui se raccorde à la fente (12) dans la direction de l'axe longitudinal (L) et est opposée à la bride (11) et qui, dans la position non tendue, peut exercer une composante de force dirigée radialement vers l'intérieur sur le deuxième élément de serrage (22).

3. Le manchon de montage selon la revendication 1 ou 2, dans lequel le premier élément de serrage (14) comprend une patte qui est formée d'un seul tenant avec le premier manchon (1) et qui s'étend le long de l'axe longitudinal (L) et dont l'extrémité libre se trouve du côté opposé à la bride (11).

4. Le manchon de montage selon la revendication 3, dans lequel le premier élément de serrage (14) comprend des renforts (140) s'étendant transversalement à l'axe longitudinal (L).

5. Le manchon de montage selon l'une quelconque des revendications précédentes, dans lequel le deuxième élément de serrage (22) comprend une patte formée d'un seul tenant avec le deuxième manchon (2) et s'étendant sensiblement le long de l'axe longitudinal (L), dont l'extrémité libre, lorsqu'elle est assemblée avec le premier manchon (1), est située sur le côté du deuxième manchon (2) tourné vers la bride (11).

6. Le manchon de montage selon la revendication 5, dans lequel le deuxième élément de serrage (22) est en forme de S, comprend une première section (220) qui se raccorde à une première face d'extrémité (200) du corps (20) du deuxième manchon (2) et dans laquelle la distance du deuxième élément de serrage (22) par rapport à l'axe longitudinal (L) reste sensiblement la même le long de l'axe longitudinal (L), comprend une deuxième section (221) qui se raccorde à la première section (220) et dans laquelle la distance du deuxième élément de serrage (22) par rapport à l'axe longitudinal (L) augmente de manière continue le long de l'axe longitudinal (L), et comprend une troisième section (222) qui se raccorde à la deuxième section (221) et dans laquelle la distance du deuxième élément de serrage (22) par rapport à l'axe longitudinal (L) reste sensiblement la même le long de l'axe longitudinal (L).

7. Le manchon de montage selon la revendication 5 ou 6, dans lequel une butée axiale (223) est prévu à l'extrémité libre du deuxième élément de serrage (22) qui est réalisée sous la forme d'un épaississement radial de l'extrémité libre.

8. Le manchon de montage selon l'une quelconque des revendications 5 à 7, dans lequel une butée radiale (225) est prévue à l'extrémité libre du deuxième élément de serrage (22), laquelle butée radiale (225) s'étend dans la direction circonférentielle sur une zone partielle d'une face frontale (224) du deuxième élément de serrage (22).

9. Le manchon de montage selon l'une quelconque des revendications précédentes, dans lequel un raccord de tube (21) est prévue au niveau d'une deuxième face d'extrémité (201) du corps (20) du deuxième manchon (2), lequel raccord de tube (21) comprend au moins une section (210, 211) qui s'étend dans une région proche de la circonférence à partir de la deuxième face d'extrémité (201) le long de l'axe longitudinal (L).

10. Le manchon de montage selon la revendication 9, dans lequel le raccord de tube (21) s'étend sensiblement sur la moitié de la circonférence de la seconde face d'extrémité (201) et comprend une section de base (210) et deux sections latérales (211) adjacentes et espacées de celle-ci, dans lequel la dimension le long de la circonférence de la section de base (210) est un multiple des dimensions le long de la circonférence des sections latérales (211).

11. Le manchon de montage selon la revendication 9 ou 10, dans lequel les sections (210, 211) du raccord de tube (21) comprennent une rainure de fixation (212) s'étendant dans la direction circonférentielle.

12. Le manchon de montage selon l'une quelconque des revendications précédentes, dans lequel le deuxième manchon (2) comprend une rainure de séparation (28) s'étendant dans la direction circonférentielle.

13. Le manchon de montage selon la revendication 1, dans lequel le collet (16) du premier manchon (1) comprend un premier alésage (17) et dans lequel le tube (26) du deuxième manchon (2) comprend un deuxième alésage (27), dans lequel l'élément de serrage (3) s'étendant à travers les deux alésages (17, 27), au moins partiellement.

14. Le manchon de montage selon la revendication 13, dans lequel le premier alésage (17) comprend un alésage traversant et dans lequel le deuxième alésage (27) comprend un alésage fileté.

15. Le manchon de montage selon l'une quelconque des revendications précédentes, dans lequel une décharge de traction (18) est disposée sur le collet (16) du premier manchon (1) qui s'étend depuis le collet (16) le long de l'axe longitudinal (L) vers la bride (11).

16. Le manchon de montage selon l'une quelconque des revendications précédentes, dans lequel au moins un cran d'arrêt (19) est prévu sur le collet (16) du premier manchon (1), à distance du corps en forme de manchon (20), qui s'étend depuis le collet (16) le long de l'axe longitudinal (L) en direction de la bride (11), le cran d'arrêt (19) comportant à son extrémité libre un élément d'arrêt (190) dirigé vers l'extérieur.

17. Un agencement d'éléments d'actionnement comprenant un manchon de montage selon l'une quelconque des revendications précédentes et un élément d'actionnement (7), dans lequel l'élément d'actionnement (7) comprend au moins un élément d'encliquetage dirigé vers l'intérieur qui peut être verrouillé avec le au moins un cran d'arrêt (19) du premier manchon (1).

18. Un procédé d'utilisation d'un manchon de montage selon l'une quelconque des revendications 1 à 16, comprenant les étapes consistant à :
- Introduire le manche de montage dans un évidement prévu à cet effet dans une paroi (8); et
- Serrage de l'élément de serrage (3).

19. Le procédé selon la revendication 18, comprenant en outre l'étape consistant à :
- sectionner le deuxième manchon (2) au niveau de la rainure de séparation (28).

20. Le procédé selon la revendication 18, comprenant en outre l'étape consistant à :
- fixer un tube vide (4) avec un dispositif de fixation de tube (5) à la rainure de fixation (212) du deuxième manchon (2).

21. Le procédé selon l'une quelconque des revendications 18 à 20, comprenant en outre l'étape consistant à :
- faire passer un câble (6) à travers les deux manchons (1, 2) du manchon de montage.

22. Le procédé selon la revendication 21, comprenant en outre les étapes consistant à :
- connecter un élément de commande (7) avec le câble (6); et
- placer l'élément de commande (7) dans le manchon de montage.
